# EUROPEAN PATENT APPLICATION

(11) **EP 1 589 222 A2**
(43) Date of publication of application: **26.10.2005**
(21) Application number: 05008244.5
(22) Date of filing: 15.04.2005
(51) Int. Cl.: F03D 9/00

(54) **Wind turbine with two generators.**

(30) Priority: 21.04.2004 IT mi20040778
(71) Applicant: Trimmer S.A., 6830 Chiasso (CH)
(72) Inventor: Bianchi, Emilio, 6834 Morbio Inferiore (CH)
(74) Representative: La Ciura, Salvatore

(57) **Abstract**

A wind generator (1), comprising at least one supporting tower or upright (2), on the upper extremity of which is mounted a swivelling platform (3), has at least two rotary alternators (4) and (5) are installed on said swivelling tower, which said alternators are joined together and connected to shaft (9) and hub (10) of a rotor with two or more blades (11), with a variable setting angle.

The alternators are driven by the same rotor, but connected to the national grid or users in a wholly independent way from the other alternator, and are connected to one another by a joint (6) fitted with a brake (7).

## Description

This invention relates to the field of small wind generators, which transform the kinetic energy of the wind into mechanical, and subsequently electrical energy.

In many countries, such as Italy, machines with limited power, below 20 KW for example, benefit from subsidies and tax relief when they are connected in parallel with the national grid, with a low-voltage connection, thus eliminating the need for expensive sub-stations between low- and medium-voltage networks, as in the case of higher power generators.

Small, simple, basic wind generators with limited safety have been used in countries with a low population density and very large areas of land available, with installations at a sufficient distance from roads and inhabited areas; in the event of malfunction of the machine, the projection of fragments, which may be large, thus constitutes a limited danger.

Under these circumstances, it can be advantageous to give simplicity and low cost priority over safety. In particular, the only solutions currently available are accepted, although they probably do not comply with current European legislation.

The situation is different in Europe, and Italy in particular, where safety is a major issue, if it is decided to install a small generator, in view of the modest size of the plots of land available, and the closeness of roads, which make protection against personal injury the main priority.

In the field of wind generators, safety is achieved with equipment whose cost is almost independent of the size of the generator, and therefore has a significant incidence when fitted to small machines.

Wind generators generally consist of an alternator connected mechanically to a rotor with a horizontal axis, having a number of blades, which is caused to rotate by the aerodynamic action exerted by the wind on the contour of the blades.

The rotor and alternator are mounted on a platform that swivels according to a vertical axis and is installed on the summit of a tower anchored to the ground.

In order to be efficient, and above all safe, even under emergency conditions, such as high wind or accidental loss of connection to the grid, wind generators must have air brakes, so that energy production can be shut down in a very short time, thus preventing an excessive increase in revolutions, which is hard to control; they must also be able to take up a safe parking position.

The mechanical brakes fitted to simplified wind generators have not proved sufficient under emergency conditions. In fact, simplified machines must be designed so that in case of emergency, the rotor disc (plane of rotation) is moved parallel to the wind direction; however, the mechanisms involved are not 100% reliable, and will not be further described here.

Thanks to the widespread use of electronic processors in all industries, said processors have become essential to guarantee the required safety in wind generators, which is of the greatest importance in densely inhabited locations close to roads accessible by third parties.

Hence the need to improve the limited safety of small wind generators so that small wind generators come into use on a large scale, as desired by the legislator. It is therefore necessary to make wind generators of limited power safe, using the systems already commonly installed on larger machines, without compromising the cost / energy yield ratio, and this is the problem that the present invention proposes to solve.

The most common configuration of known wind generators is the one with a horizontal-axis rotor.

An electromechanical system, controlled by an electronic processor fitted with a wind direction sensor, ensures that the rotor axis remains parallel to the wind direction.

It is advisable to vary the rotor blade setting angle during operation. The blades are connected to the hub via rolling bearings. The processor, as well as keeping the nose-cone in the wind, ensures that the generator operates with the necessary safety. When the wind speed, detected by an anemometer, exceeds a given value (10- 12 kph), the blades, which may be hydraulically controlled, for example, move to the maximum positive setting angle, and when the mechanical parking brake has been released, the rotor begins to turn.

When the rotor reaches the number of revolutions per minute at which the alternator can be connected to the national grid, the processor closes the contactor and connection to the grid takes place.

During operation, the processor varies the setting angle of the blades at intervals of a few seconds, depending on the wind speed, to find the value that corresponds to the maximum energy yield.

A number of hours after the machine is started up, the wind may drop below the minimum speed required to produce energy. In such case the processor moves the blades to the maximum negative setting angle, in order to constitute the necessary air brake, which is essential for correct shutdown of the machine, and the generator moves to the parking position and applies the mechanical brake.

However, if the wind speed is such as to overload the generator structures, though remaining within the required safety margin, the processor will limit the setting angle of the blades to prevent the energy production from exceeding the limits allowed by the generator equipment. If, exceptionally, the wind exceeds 90 kph, the processor will move the blades to the minimum negative setting angle, disconnect the generator from the grid and shut down the machine.

As will be seen, the machine as a whole guarantees the maximum energy yield and prevents excessive, dangerous loads on the parts. Finally, any emergency, such as detachment from the grid, overheating of generator, vibrations or rotation speed above the established limits, will shut down the system and signal on a screen the emergency which caused the shutdown of the generator.

As mentioned, the only drawback of a similar solution, already used in large wind generators, is its cost, because the cost of the accessories account for a considerable proportion of the cost of small wind generators.

For example, a rotor with a diameter of just under 9 metres is sufficient to generate 20 kilowatt hours (the maximum allowed power for connection in parallel to the national grid in low voltage); with a rotor diameter of 12.5 m, the area swept by the rotor disc is twice as large, offering the possibility of producing twice the power at a plant cost not much greater than that of a 20 kw machine.

As the cost of the safety systems is equal for plants of any power, the percentage of the cost of a 20 kw plant accounted for by safety systems is therefore twice as high as for a 40 kw plant.

To obviate this drawback, the invention proposes the installation of two 20 KW alternators, driven by the same rotor and mounted on the same tower, but connected independently to the grid, with two control boards, dual independent wiring.

Each alternator leads to its own user, and is connected to the grid as if it were a single alternator but, as mentioned, it shares some parts, such as the tower, rotor platform and safety system, with another user.

Without going into the details of the cost analysis, the financial advantages are obvious: a single planning application, a single site, and in practice the same maintenance. In addition to the direct financial benefits of that solution, which allows the large-scale use of small wind generators to be promoted, a further price reduction can be generated by mass-production of these machines. Last but not least, they have a lower environmental impact: one wind generator instead of two located close together.

The machine is also more durable because of lower wear: when the wind has the characteristics of a breeze, with a speed lower than 20-25 kph, only one alternator will be connected to the grid, leading to better use of that alternator and greater efficiency, as the system will operate close to the maximum power of the single alternator, which is the pre-requisite for obtaining the maximum efficiency.

The processor starts up one of the two alternators from time to time, to guarantee 50% production for each user.

If the wind exceeds the threshold of approx. 25 kph, both alternators will come into operation.

A further opportunity also arises if the two users which share the tower, rotor and drive have different energy requirements. Within certain limits the processor can use one of the two generators to a greater extent than the other, for example to guarantee one-third of the energy to one user and two-thirds to the other, instead of 50-50, as described above.

The advantages of the solution are once again obvious.

The invention involves the use of a larger wind generator, sharing the costs of the basic machine between two or more users.

More than two alternators could also be installed, for three or more users.

A single larger alternator, such as 40 kw, could also be installed, giving a simpler machine: however, the wiring, the contactors with the grid, and the protections required by the grid manager, would be dual, thus maintaining two users / contacts with the grid. However, a greater energy yield would be obtained with the dual alternator, and the malfunction of a single electrical system would not entirely shut down the wind generator, which could still operate pending maintenance work.

The subject of the invention is a wind generator as described in the appended claims.

A more detailed description of a preferred embodiment of the generator according to the invention will now be given, by reference to the annexed drawings, wherein:
- fig. 1 is the side view of a wind generator according to the invention;

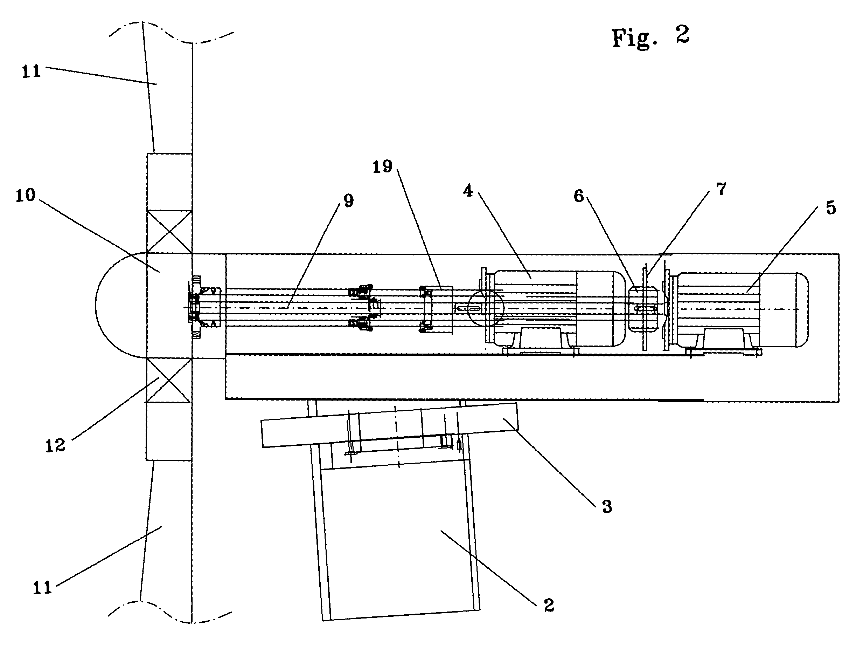

- fig. 2 schematically shows, in longitudinal cross-section, the wind generator according to the invention.

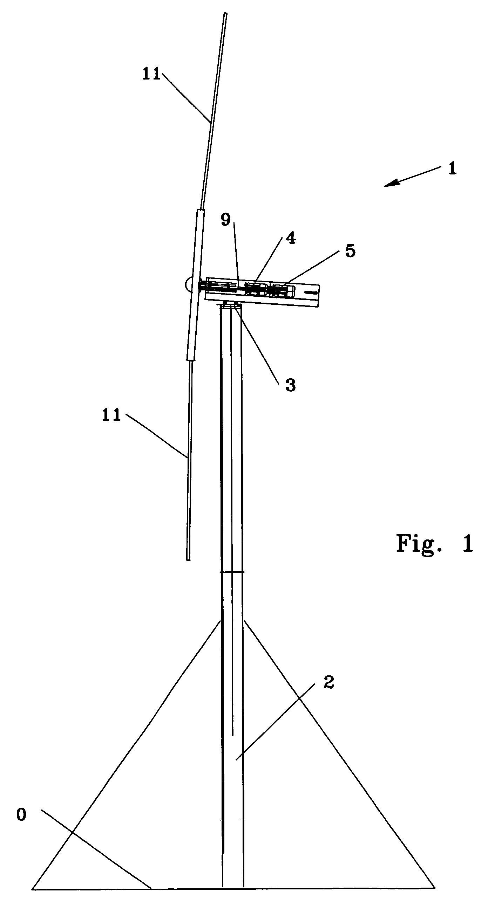

Fig. 1 shows a wind generator (1) which, according to the invention, comprises a supporting tower (2), anchored to the ground (0), with a swivelling platform (3) mounted on its free end, on which said platform two rotating alternators (4) and (5) are installed, said alternators being connected, for example via a joint (7) or via toothed belt drive not shown, to the shaft (9) and hub (10) of a rotor with a plurality of blades (11).

An overgear 19 is inserted between shaft (9)mand the generators (4) and (5). The joint (6) is fitted with a brake (7).

Blades (11), are connected to hub (10) via rolling bearings (12). The setting angle of each blade (11) is regulated in a known way, using an electronic processor, not illustrated.

A single alternator (4) or (5) will be connected to the national grid via cables, an electric control board, protections and contactors which are wholly independent of the other alternator: one user will therefore be wholly independent of the other, although they share some parts of the basic wind generator.

These devices are of a known type, and the relevant description is not necessary.

Although not shown in the figure, there may be more than two generators, provided that each one remains electrically independent of the others. Though connected to the grid via dual wiring, dual control boards and dual protections, the two alternators can become one alternator with twice the power.

## Claims

1. Wind generator (1), comprising at least one supporting tower or upright (2), on the upper extremity of which is mounted a swivelling platform (3), **characterised in that** at least two rotary alternators (4) and (5) are installed on said swivelling tower, which said alternators are joined together and connected to shaft (9) and hub (10) of a rotor with two or more blades (11) with a variable setting angle.

2. Wind generator as claimed in claim 1, **characterised in that** said rotary alternators are driven by the same rotor, but connected to the national grid or users in a wholly independent way from the other alternator.

3. Wind generator as claimed in claim 1 or 2, **characterised in that** said rotary alternators are connected to one another by a joint (6) fitted with a brake (7).

4. Wind generator as claimed in claim 3, **characterised in that** said rotary alternators are connected by a toothed belt to rotor shaft (9).

5. Wind generator as claimed in claim 2, **characterised in that** it includes means designed to connect one of said alternators to the grid or a single user, while the other alternator is inoperative.

6. Wind generator as claimed in claim 3, **characterised in that** it includes means designed to connect both alternators to the grid or to an individual user, but independently of one another.

7. Wind generator as claimed in claim 4, comprising 3 alternators and means designed to connect only one of them to the grid or to a single user, while the other alternators are inoperative.

8. Wind generator as claimed in claim 4, comprising 3 alternators and means designed to connect all three alternators to the grid or to an individual user, each one independently of the others.

9. Wind generator wherein only one alternator of higher power is installed, but which is connected to the grid with dual wiring, a dual control board and dual protections.

10. Wind generator according to claim 2 having an impeller consisting of a plurality of blades (11) with the root connected to a hub (10), each blade (11) being connected to said hub via rolling bearings (12) which allow the setting angle to be varied during start-up/operation/shut-down of the generator.
